# EUROPÄISCHE PATENTSCHRIFT

(11) **EP 1 779 203 B1**
(45) Veröffentlichungstag und Bekanntmachung des Hinweises auf die Patenterteilung: **27.02.2008**
(21) Anmeldenummer: 05775835.1
(22) Anmeldetag: 09.08.2005
(51) Int. Cl.: G05B 19/00, G06F 9/44, G06F 11/20

(54) **PARAMETERIDENTIFIKATION FÜR FELDGERÄTE IN DER AUTOMATISIERUNGSTECHNIK**
IDENTIFICATION OF PARAMETERS FOR FIELD DEVICES USED IN AUTOMATION TECHNOLOGY
IDENTIFICATION DE PARAMETRES D'APPAREILS DE TERRAIN DANS LA TECHNIQUE D'AUTOMATISATION

(30) Priorität: 19.08.2004 DE 102004040282
(43) Veröffentlichungstag der Anmeldung: 02.05.2007
(73) Patentinhaber: SIEMENS AKTIENGESELLSCHAFT, 80333 München (DE)
(72) Erfinder: FELD, Joachim, 90451 Nürnberg (DE); GAST, Christiane, 90455 Nürnberg (DE); OPGENOORTH, Bernd, 90402 Nürnberg (DE); SCHLERETH, Michael, 91452 Wilhermsdorf (DE); BECKER, Norbert, 91058 Erlangen (DE); DINGES, Clemens, 90587 Obermichelbach (DE)
(86) Internationale Anmeldenummer: PCT/EP2005/053920
(87) Internationale Veröffentlichungsnummer: WO 2006/018410

(56) Entgegenhaltungen:
- WO-A-00/77585
- DE-A1- 10 142 378
- US-A- 5 980 078
- TORO J ET AL: "Automatic configuration and diagnostics for fieldbus based automation" FACTORY COMMUNICATION SYSTEMS, 2002. 4TH IEEE INTERNATIONAL WORKSHOP ON AUG 28 - 30, 2002, PISCATAWAY, NJ, USA,IEEE, 28. August 2002 (2002-08-28), Seiten 143-148, XP010623303 ISBN: 0-7803-7586-6

## Beschreibung

Die Erfindung betrifft eine Vorrichtung und ein Verfahren zur Identifikation von Parametern eines in der Automatisierungstechnik eingesetzten Feldgerätes.

In der Automatisierungstechnik eingesetzte Anlagen bestehen aus einer Vielzahl von Feldgeräten wie z. B. Sensoren, Reglern, Filtern und Antrieben. Bei einem Ausfall eines dieser Feldgeräte muss ein Ersatzgerät eingesetzt werden, das sich bezüglich des auf der Anlage ablaufenden Produktionsprozesses mit den gleichen Betriebskenngrößen wie das ursprüngliche Gerät verhält. Um ein entsprechendes Betriebsverhalten des neuen Feldgerätes in dem Produktionsprozess zu gewährleisten, muss dieses geeignet parametrisiert werden.

Häufig ist das Ersatzgerät mit dem ursprünglichen Gerät nicht vollständig baugleich sondern von einem anderen Typ oder Hersteller. Daher kann die Parametrierung des ursprünglichen Gerätes nicht einfach auf das Ersatzgerät überspielt werden. Die alten Geräteparameter müssen also z. B. mittels eines Engineering-Werkzeugs in neue Parameter für das Ersatzgerät übersetzt werden. Dies setzt voraus, dass die alten Geräteparameter zum Zeitpunkt des Austausches der Geräte noch zugänglich sind.

Eine Möglichkeit zur Akquisition der Feldgeräteparameter ist die Verwendung einer speziellen, auf das jeweilige Feldgerät zugeschnittenen Software zum Auslesen der Parameter. Bei einem defekten Gerät sind die Parameter jedoch u. U. nicht mehr auslesbar.

Alternativ können die Geräteparameter auf einem zentralen Datenserver hinterlegt werden, um die Parameter auch außerhalb der geräteeigenen Hardware zugänglich zu machen. Die zentral gespeicherte Parametrierung stimmt jedoch nicht zwangsläufig mit der auf dem Feldgerät gespeicherten Parametrierung überein. Im laufenden Betrieb des Feldgerätes werden oftmals Änderungen an seinen Einstellungen vor Ort z. B. von einem Servicetechniker durchgeführt. Diese Veränderungen können nur schwierig lokal erkannt werden und müssen dann über andere, zusätzliche Kommunikationswege wieder in die gespeicherte Parametrierung zurückgespielt werden.

Dem Stand der Technik entsprechen auch normierte Gerätebeschreibungssprachen, die für eine Geräteklassen definieren, welche herstellerübergreifenden Parameter ein Gerät beschreiben. Ein Beispiel hierfür ist die Electronic Device Description Language (EDDL), die aus der Pressemitteilung vom 19.04.2004 "Einheitlicher feldbusübergreifender Sprachstandard zur Gerätebeschreibung" (www.profibus.com) bekannt ist. Diese Gerätebeschreibungssprachen werden aber häufig durch herstellerspezifische Parameter, z.B. für Optimierungen, ergänzt, die beim Gerätetausch auf einen anderen Hersteller nicht übertragen werden können. Geräte, die den herstellerübergreifenden Standard oder eine unpassende Versionsnummer implementieren, können nicht erfasst werden.

Ein weiterer aus dem Stand der Technik bekannter Lösungsansatz für das Problem ist, die Parameter auf einem wechselbaren Speichermedium, z. B. einer MMC, abzuspeichern. Beim Tausch des Gerätes muss dann nur das Speichermedium in die neue Baugruppe gesteckt werden, um die Parameter wieder verfügbar zu machen. Vorraussetzung hierfür ist, dass das Ersatzgerät baugleich ist und ebenfalls eine Vorrichtung zum Auslesen des Speichermediums aufweist. Dieses wie auch alle anderen zuvor genannten, aus dem Stand der Technik bekannten Verfahren bedingen generell die Speicherung der Geräteparameter auf einem Medium. Zur Übertragung der Geräteparameter auf ein Ersatzgerät ist ein Lesezugriff auf das Medium notwendig, wobei beim Lesen und Schreiben der Daten der gleiche Standard verwendet werden muss. Stammen ursprüngliches Gerät und Feldgerät von verschiedenen Herstellern, ist hierzu ein herstellerübergreifender Standard notwendig.

Aus TORO J ET AL: "Automatic configuration and diagnostics for fieldbus based automation" FACTORY COMMUNICATION SYSTEMS, 2002, 4TH IEEE INTERNATIONAL WORKSHOP ON AUG 28 - 30, 2002, PISCATAWAY, NJ, USA, IEEE, 28", ist ein Verfahren zur automatischen Konfiguration von Feldgeräten bekannt. Zur Konfiguration eines neuen Feldgerätes, welches beispielsweise ein defektes Feldgerät ersetzen soll, werden Feldgeräteparameter direkt von einem Planungssystem in das an einem Feldbus angeschlossene Feldgerät geladen. Umgekehrt werden beispielsweise für Diagnosezwecke nützliche Daten des Feldgerätes zurück zum Planungssystem gesendet.

Der Erfindung liegt die Aufgabe zu Grunde, die Parametrierung von Feldgeräten in Automatisierungssystemen zu erleichtern.

Diese Aufgabe wird durch eine Vorrichtung zur Parameteridentifikation mindestens eines Feldgerätes für die Automatisierungstechnik gelöst mit den Merkmalen des Anspruchs 1 gelöst.

Diese Aufgabe wird weiter durch ein Verfahren zur Parameteridentifikation mindestens eines Feldgerätes für die Automatisierungstechnik mit den Merkmalen des Anspruchs 8 gelöst.

Bei dem erfindungsgemäßen Verfahren wird das Betriebsverhalten des Feldgerätes im laufenden automatisierten Prozess erfasst und protokolliert. Bei den Betriebsinformationen handelt es sich beispielsweise um die Eingangs- und Ausgangssignale des Feldgerätes, die im Rahmen eines Beobachtungsprozesses erfasst werden. Es handelt sich nicht um gerätespezifische Daten, die in das Feldgerät zu dessen Parametrierung eingegeben werden müssen.

Die Betriebsinformationen werden in dem ersten Speicherbereich der erfindungsgemäßen Vorrichtung abgelegt und können dort beispielsweise kontinuierlich im laufenden Betrieb aktualisiert werden. Durch die Aufzeichnung der Betriebsinformationen auf einem Speichermedium stehen diese auch bei nicht aktivem Feldgerät, insbesondere auch bei einem defekten Feldgerät, zur Verfügung. Somit ist kein explizites Speichern der herstellerspezifischen Geräteparameter mehr notwendig, um die Einstellungen des Feldgerätes rekonstruierbar zu machen.

Unter den Betriebsinformationen sind prinzipiell alle verfügbaren Daten der Anlage zu verstehen, wie z. B. der gesamte Busverkehr. Es wird nicht im Vorhinein definiert, welche Werte gemessen und aufgezeichnet werden. Aus dem gesammelten Datenpool können ad hoc die Modellparameter oder Betriebskenngrößen ermittelt werden.

Durch das Abspeichern der Geräteinformationen in dem ersten Speicherbereich können auch historische Parametrierungen des Feldgerätes rekonstruiert werden.

In dem zweiten Speicherbereich ist das herstellerunabhängige Feldgerätemodell abgelegt. Mit dem Feldgerätemodell lässt sich durch Parametrierung seiner zugehörigen Modellparameter das Betriebsverhalten verschiedener Feldgeräte eines bestimmten Typs nachbilden. Beispiele für einen Gerätetyp sind in diesem Zusammenhang ein PI-Regler mit seinen zugehörigen Reglerparametern wie Verstärkungsfaktor und Zeitkonstante oder ein digitales Filter mit seinen die Filtercharakteristik definierenden Koeffizienten.

Die Verarbeitungseinheit hat Zugriff auf beide Speicherbereiche. Mit Hilfe der in dem ersten Speicherbereich abgelegten Betriebsinformationen des Feldgerätes ist sie in der Lage, die Modellparameter des herstellerunabhängigen Feldgerätemodells zu bestimmen. Als Ergebnis steht somit ein parametriertes, herstellerunabhängiges Feldgerätemodell zur Verfügung, dessen Prozessverhalten dem des eingesetzten Feldgerätes entspricht.

Beispiele für identifizierbare Parameter sind neben den bereits erwähnten Reglerparametern Einsatzbedingungen (z. B. Temperaturbereich), Grenzwerte, Kennlinien, Projektierungsdaten wie Busadressen und Anlagenkennzeichen.

Die von der erfindungsgemäßen Vorrichtung ermittelten Modellparameter bzw. Betriebskenngrößen und Systemparameter erlauben eine herstellerunabhängige Beschreibung des Betriebsverhaltens eines Feldgerätetyps, wobei der Feldgerätetyp durch das Gerätemodell definiert ist.

Da die als Basis zu Identifikation der Modellparameter dienenden Betriebsinformationen im ersten Speicherbereich abgelegt sind, stehen sie auch nach einem Ausfall des Feldgerätes zur Identifikation der Modellparameter zu Verfügung.

Bei einem Ausfall des Feldgerätes kann ein Ersatzgerät sehr schnell eingebaut und entsprechend der Prozesserfordernisse des Automatisierungsprozesses parametriert werden, wenn die von der Verarbeitungseinheit für das Feldgerät identifizierten Modellparameter als Basis zur Generierung herstellerspezifischer Geräteparameter für ein weiteres, insbesondere nicht baugleiches Feldgerät vorgesehen sind. Dabei werden auch Optimierungen der Parameter, die im laufenden Prozess vorgenommen wurden, übertragen. Die Parametrierung des neuen Geräts kann z.B. so langen manuell variiert werden, bis der Paramteridentifikator signalisiert, dass das Verhalten des neuen Gerätes jetzt dem alten Gerät entspricht. Der Prozess kann weiterhin optimal gefahren werden.

Die Modellparameter bilden eine sehr gute Basis, um ein Ersatzgerät, welches u. U. von einem anderen Hersteller als das ursprüngliche Feldgerät stammt, im Kontext des Automatisierungsprozesses geeignet zu parametrieren. Die herstellerspezifischen Daten, mit denen das ursprüngliche Feldgerät parametriert ist, sind nur hilfreich bei der Parametrierung eines exakt baugleichen Ersatzgerätes. Hingegen kann z. B. bei einem Gerätetausch aus den Modellparametern eine herstellerspezifische Parametrierung des neuen Feldgerätes manuell oder automatisch nachgebildet werden, ohne ein spezielles auf das alte Feldgerät zugeschnittene Engineering-Werkzeug zu erfordern.

Vorteilhafterweise wird ein automatische Parametrierung eines Ersatzfeldgerätes dadurch ermöglicht, dass die Vorrichtung eine weitere Verarbeitungseinheit aufweist, die zur Generierung der herstellerspezifischen Geräteparameter auf Basis von Sollwerten für die Modellparameter vorgesehen ist. Beispielsweise kann für das weitere insbesondere als Ersatzfeldgerät dienende Feldgerät ein herstellerspezifischer Targetcompiler zur Parametrierung eingesetzt werden. Alternativ kann eine systematische Variation der herstellerspezifischen Parameter manuell oder automatisch durchgeführt werden mit dem Ziel, das durch die herstellerunabhängigen Modellparameter beschriebene Betriebsverhalten des Feldgerätes nachzubilden. Beispiel hierfür ist die Annäherung des Betriebsverhaltes des Ersatzfeldgerätes an eine durch das Feldgerätemodell und dessen Modellparameter definierte Übertragungsfunktion. Diese systematische Parametervariation könnte sowohl online als auch offline erfolgen.

Bei einer Online-Parametrierung kann über eine Rückkoppelschleife ein von der Beobachtungseinheit beobachtete Feldgeräteverhalten des neuen Feldgerätes als Basis zur Identifikation entsprechender Modellparameter verwendet werden. In einer vorteilhaften Ausführungsform der Erfindung weist hierzu die weitere Verarbeitungseinheit einen Regler auf, der aus einer Abweichung von für das weitere Feldgerät mit Hilfe der Vorrichtung bestimmten Modellparametern und den Sollwerten für die Modellparameter die herstellerspezifischen Geräteparameter des weiteren Feldgerätes ermittelt. Die Modellparameter des weiteren Feldgerätes bzw. Ersatzfeldgerätes werden mit den Modellparametern des ursprünglichen Feldgerätes verglichen und eine Abweichung dieser Ist- und Sollwerte über einen Regelkreis ausgeregelt.

Vorteilhafterweise ist die Vorrichtung derartig ausgebildet, dass die Identifikation der Modellparameter sowohl während als auch außerhalb des Betriebes des Feldgerätes durchführbar ist. Hierzu muss lediglich sichergestellt sein, dass die Verarbeitungseinheit auf den ersten und den zweiten Speicherbereich unabhängig vom Zustand des Feldgerätes Zugriff hat und die Identifikation der Modellparameter unabhängig vom Zustand des Feldgerätes durchführen kann. Bei dieser erfindungsgemä-ßen Ausführungsform ist sichergestellt, dass auch nach Ableben des Feldgerätes die zur Parametrierung eines Ersatzgerätes notwendigen Daten zur Verfügung stehen.

Eine einfache Methode zur Bereitstellung der für die Parameteridentifikation benötigten Betriebsinformationen lässt sich dadurch realisieren, dass die Beobachtungseinheit zur Aufzeichnung von über Außenschnittstellen des Feldgerätes gesendeten und/oder empfangenen Signalen vorgesehen ist. Diese Signale sind in der Regel Telegramme in einem Netzwerk wie z. B. LAN oder Feldbus.

Vorteilhafterweise wird die zweite Speichereinheit zur Speicherung des herstellerunabhängigen Feldgerätemodells in einer standardisierten Beschreibungssprache vorgesehen. Ein Beispiel hierfür ist das so genannte HART-Protokoll sowie die Profile RIO, Waage- oder Dosiergeräte.

Im Folgenden wird die Erfindung anhand der in den Figuren dargestellten Ausführungsbeispiele näher beschrieben und erläutert. Es zeigen:
- FIG 1: Eine schematische Darstellung einer Vorrichtung zur Parameteridentifikation,
- FIG 2: ein Realisierungsbeispiel für ein Verfahren zur Parameteridentifikation,
- FIG 3: eine schematische Darstellung eines Verfahrens zur Generierung von herstellerspezifischen Geräteparametern auf der Basis von Sollwerten für Modellparameter und
- FIG 4: eine schematische Darstellung eines weiteren Verfahrens zur Generierung von herstellerspezifischen Geräteparametern auf der Basis von Sollwerten für Modellparameter.

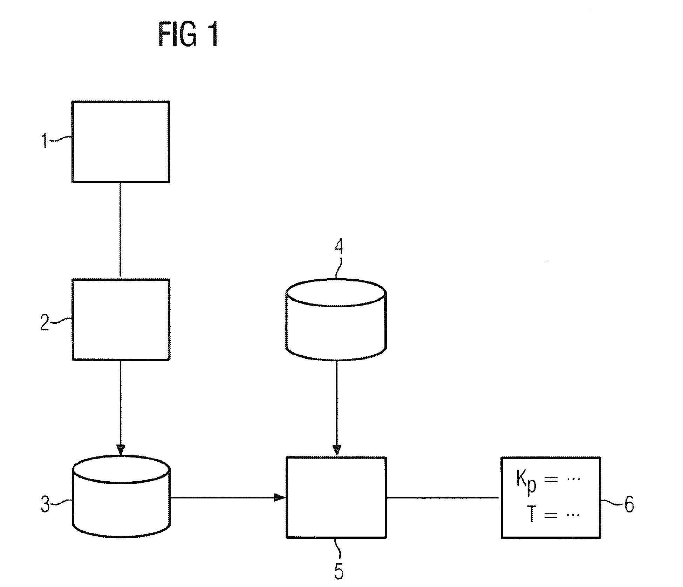

FIG 1 zeigt eine schematische Darstellung einer Vorrichtung 13 zur Parameteridentifikation. Ein in einem Automatisierungsprozess eingebundenes Feldgerät 1 ist mit einer Beobachtungseinheit 2 verbunden. Das Feldgerät ist mit einem herstellerspezifischen Parametersatz entsprechend der Prozesserfordernisse kalibriert worden.

Die Beobachtungseinheit 2 ist als so genannter Autonomic Manager ausgeführt, der das Verhalten des Feldgerätes im laufenden Betrieb kontrolliert. Hierzu misst der Autonomic Manager 2 die an den Außenschnittstellen des Feldgerätes 1 anliegenden Signale und zeichnet diese auf. Bei den Signalen handelt es sich z. B. um Telegramme, die über ein Netzwerk gesendet werden, wie z. B. WLAN oder Feldbus oder z. B. um Sensorwerte. Die aufgezeichneten Signale werden in einem ersten Speicherbereich 3 abgelegt.

In einem zweiten Speicherbereich 4 ist ein Feldgerätemodell abgelegt, das das Betriebsverhalten des Feldgerätes 1 herstellerübergreifend beschreibt. Mit dem Feldgerätemodell lassen sich verschiedene Feldgeräte desselben Typs (z. B. PID-Regler) beschreiben. Das Feldgerätemodell weist Modellparameter 6 auf, die das Systemverhalten des Feldgerätemodells bestimmen.

Eine Verarbeitungseinheit 5 hat Zugriff auf die in dem ersten Speicherbereich abgelegten Betriebsinformationen, die das Betriebsverhalten des realen Feldgerätes 2 beschreiben, und das im zweiten Speicherbereich 4 abgelegte Felgerätemodell. Basierend auf den Betriebsinformationen des realen Feldgerätes 1 bestimmt die Verarbeitungseinheit 5 die Modellparameter 6 des Feldgerätemodells derart, dass das parametrisierte herstellerunabhängige Feldgerätemodell dasselbe Systemverhalten aufweist, wie das reale Feldgerät 1. Bei den identifizierten Modellparametern handelt es sich beispielsweise um:
- Herstellerangaben wie Gerätetyp, z. B. lesbar aus einem elektronischen Typenschild
- Einsatzbedingungen wie Temperaturbereich
- Reglerparameter
- Erfassungsintervall
- Skalierungsfaktoren für Temperatur, Druck... (Hierzu sind zusätzlich Informationen über die Automatisierungsanlage notwendig, in der das Feldgerät eingesetzt wird)
- Überwachung, Grenzwerte
- Kennlinien

Die herstellerunabhängigen Modellparameter können im Folgenden als Basis zu Parametrierung weiterer Feldgeräte, die insbesondere auch von einem anderen Hersteller stammen können, verwendet werden. Dies kann zum Beispiel dann vorteilhaft sein, wenn das Feldgerät ausfällt und durch ein Ersatzfeldgerät ersetzt werden muss und das Ersatzfeldgerät nicht baugleich mit dem ursprünglichen Feldgerät ist.

Die Besonderheit bei der Parameteridentifikation besteht darin, dass die Modellparameter aus dem Runtime Verhalten des Feldgerätes ermittelt werden und kein Zugriff auf Engineeringinformationen notwendig ist. Es müssen weder Parameter aus dem Gerät noch aus sonstigen Speichern ausgelesen werden. Die Verarbeitungseinheit benötigt keine direkte Kopplung zum Autonomic Manager 2, sondern benutzt nur die in dem ersten Speicherbereich 3 abgelegten Betriebsinformationen, die auch als History bezeichnet werden können. Deshalb kann die Parameteridentifikation auch offline auf einer Kopie der History arbeiten. Im ersten Speicherbereich 3 ist ein Mechanismus vorhanden, der standardisierte Telegramme und Daten analysieren kann, um z. B. aus einem Profibustelegramm den Soll-/Istwert eines Antriebs auszulesen.

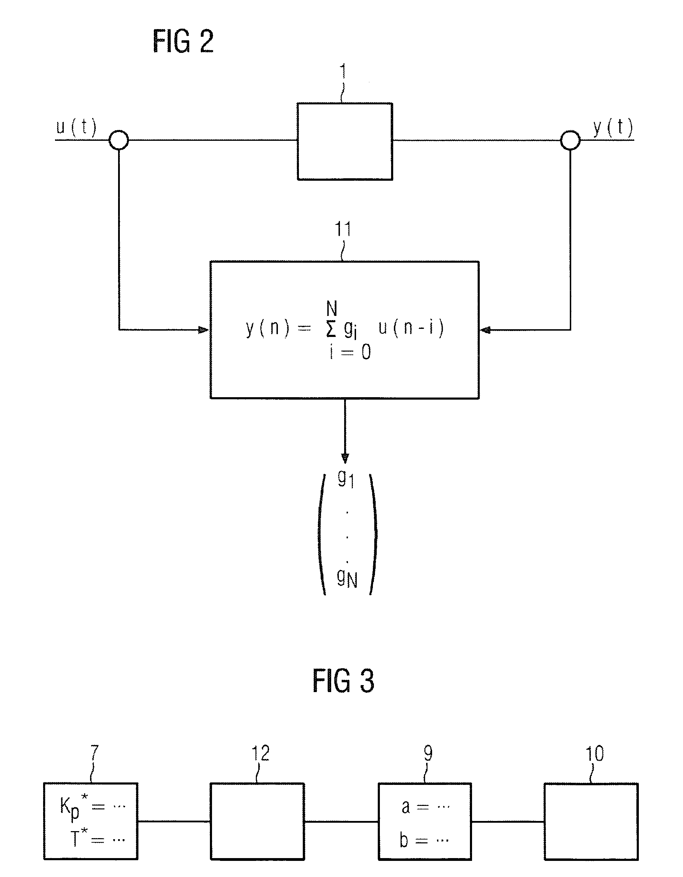

FIG 2 zeigt ein Realisierungsbeispiel für ein Verfahren zur Parameteridentifikation. In dem Beispiel wird ein so genanntes FIR (Finite Impulse Response) Filter 11 zur Identifikation von Modellparametern, die das Betriebsverhalten eines Feldgerätes 1 beschreiben, verwendet. Die zeitabhängigen Einganssignale u(t) und die Ausgangssignale y(t) des Feldgerätes 1 werden von dem FIR Filter 11 zu diskreten Abtastzeitpunkten n ausgewertet. Das FIR-Filter 11 ist durch eine Gleichung gekennzeichnet, die die Ausgangssignale y(n) mit den Eingangsignalen der letzten N Abtastwerte u(n-N)...u(n) über die Filterkoeffizienten gᵢ verknüpft. Nach N Abtastzeitpunkten stehen entsprechend N Gleichungen zur Verfügung, mit deren Hilfe die Filterkoeffizienten g₀-g_{N} ermittelt werden können. Die Filterkoeffizienten g₀...g_{N} entsprechen den herstellerunabhängigen Modellparametern, mit denen sich das Feldgeräteverhalten beschreiben lässt. Basierend auf den Filterkoeffizienten können neue herstellerspezifische Geräteparameter für ein weiteres Feldgerät eines anderen Herstellers in einem nachfolgenden Verfahrensschritt ermittelt werden.

FIG 3 zeigt eine schematische Darstellung eines Verfahrens zur Generierung von herstellerspezifischen Geräteparametern 9 auf der Basis von Sollwerten 7 für Modellparameter. Die Sollwerte 7 der Modellparameter können beispielsweise in einem vorangegangenen Verfahrenschritt mit Hilfe des FIR-Filters 11 aus FIG 2 für das Feldgerät 1 ermittelt worden sein. Im Folgenden sei angenommen, dass das Feldgerät 1 aufgrund eines technischen Defektes gegen ein weiteres nicht baugleiches Feldgerät 10, nachfolgend auch als Ersatzgerät bezeichnet, ausgetauscht werden muss. Um das gleiche Betriebsverhalten des Ersatzgerätes 10 innerhalb eines Automatisierungsprozesses zu gewährleisten, werden die zuvor für das ursprüngliche Feldgerät ermittelten Modellparameter 6 als Sollwerte 7 für das Ersatzfeldgerät 10 definiert.

Mit Hilfe eines herstellerspezifischen Targetcompilers 12 werden aus den Sollwerten 7 der Modellparameter die herstellerspezifischen Geräteparameter 9 des Ersatzfeldgerätes 10 ermittelt.

Alternativ kann auch ein aus DE 101 32 036 C2 bekanntes herstellerübergreifendes Parametrierverfahren Anwendung finden, um aus den Sollwerten 7 der Modellparameter die herstellerspezifischen Geräteparameter 9 zu erzeugen. Eine weitere Möglichkeit stellt eine systematische Variation der herstellerspezifischen Geräteparameter dar, z. B. mit dem Ziel, eine gewünschte Übertragungsfunktion nachzubilden.

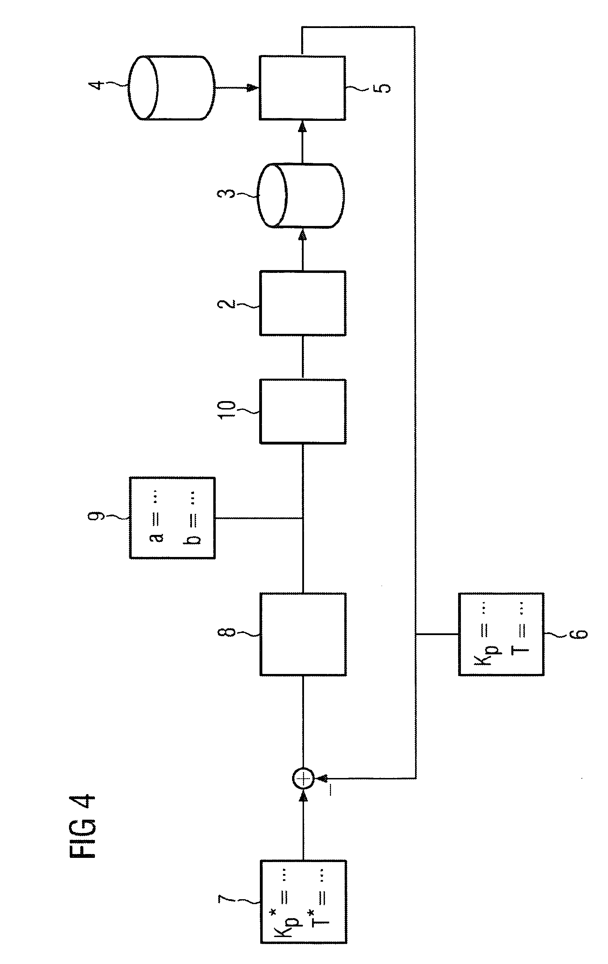

FIG 4 zeigt eine schematische Darstellung eines weiteren Verfahrens zur Generierung von herstellerspezifischen Geräteparametern 9 auf der Basis von Sollwerten 7 für Modellparameter für ein weiteres Feldgerät 10, das insbesondere als Ersatzgerät für ein ursprüngliches Feldgerät dient. Die Sollwerte 7 sind z. B. nach dem in FIG 2 beschriebenen Verfahren für das ursprüngliche Feldgerät bestimmt worden. Der Grundgedanke des dargestellten Verfahrens zur Findung der geeigneten gerätespezifischen Parameter 9 beruht auf einem geschlossenen Regelkreis.

Das Ersatzfeldgerät 10 wird mit herstellerabhängigen Geräteparametern 9 parametriert. Das Ersatzfeldgerät 10 wird mit einer Beobachtungseinheit 2 gekoppelt, die das Feldgeräteverhalten des Ersatzfeldgerätes 10 beobachtet und entsprechende Betriebsinformationen in einem ersten Speicherbereich 3 ablegt. Zur Beobachtung des Feldgeräteverhaltens greift die Beobachtungseinheit 2 die an den Außenschnittstellen des Ersatzfeldgerätes 10 anliegenden Signale ab.

In einem zweiten Speicherbereich 4 ist ein herstellerunabhängiges Feldgerätemodell abgelegt, das dem gemeinsamen Typ des Feldgerätes und Ersatzfeldgerätes 10 entspricht. Mit Hilfe einer Verarbeitungseinheit 5 werden aus den Betriebsinformationen des Ersatzfeldgerätes und dem herstellerunabhängigen Feldgerätemodell aktuelle Modellparameter 6 des Ersatzfeldgerätes 10 ermittelt.

Die aktuellen Modellparameter 6 werden zurückgekoppelt und mit den Sollwerten 7 der Modellparameter verglichen. Die Regelabweichung, die sich aus der Differenz der Sollwerte 7 und der aktuellen Modellparameter 6 ergibt, wird schließlich auf eine weitere Verarbeitungseinheit 8, die z. B. als Regler ausgeführt ist, gegeben. Am Ausgang des Reglers stehen schließlich die korrigierten herstellerspezifischen Geräteparameter 9 des Ersatzfeldgerätes 10 zur Verfügung.

Bei dem in FIG 4 beschriebenen Verfahren wird somit eine erfindungsgemäße Ausführungsform zur Parameteridentifikation nicht nur zur Bestimmung der Modellparameter des ursprünglichen Feldgerätes eingesetzt sondern darüber hinaus auch zur automatischen Parametrierung des Ersatzfeldgerätes.

Neben dem Gerätetausch kann das erfindungsgemäße Verfahren bzw. die erfindungsgemäße Vorrichtung noch für weitere Anwendungen genutzt werden. Beispiele hierfür sind:
- Ermittlung eines Zusammenhangs/einer Korrelation zwischen herstellerspezifischen Feldgeräteparametern und an den äußeren Schnittstellen beobachteten Werten mit dem Ziel, eine automatisierte Einstellung eines normierten Verhaltens für alle Feldgeräte eines Typs zu erreichen, unabhängig vom jeweiligen Hersteller oder Ausgabezustand eines Feldgerätetyps eines Herstellers.
- Simulation eines Feldgeräteverhaltens z. B. bei einer Prozesssimulation in einer Planungsphase oder im Rahmen einer virtuellen Anlagen-IBS.
- Beobachtung mehrerer gleichartiger Einrichtungen. Hierbei kann die erfindungsgemäße Vorrichtung mehrere gleichartige Feldgeräte vergleichen und die Parameter des besten Gerätes auf die anderen Geräte übertragen.
- Additive Erfassung der Betriebskenngrößen für Statistik und Nachweise.
- Vergleich von Einrichtungen.
- Ableitung optimierter Parameter.

## Patentansprüche

1. Vorrichtung zur Parameteridentifikation mindestens eines Feldgerätes (1) für die Automatisierungstechnik mit
- einer Beobachtungseinheit (2) zur Beobachtung des Feldgeräteverhaltens und Aufzeichnung von das Feldgeräteverhalten beschreibenden Betriebsinformationen,
- einem ersten Speicherbereich (3) zur Speicherung der Betriebsinformationen,
- einem zweiten Speicherbereich (4) zur Speicherung eines das Betriebsverhalten des Feldgerätes (1) nachbildenden herstellerunabhängigen Feldgerätemodells und
- einer Verarbeitungseinheit (5) zur Identifikation von dem herstellerunabhängigen Feldgerätemodell zugehörigen Modellparametern (6) basierend auf den Betriebsinformationen derart, dass das parametrisierte herstellerunabhängige Feldgerätemodell dasselbe Systemverhalten aufweist wie das reale Feldgerät (1).

2. Vorrichtung nach Anspruch 1,
**dadurch gekennzeichnet , dass** die von der Verarbeitungseinheit (5) für das Feldgerät (1) identifizierten Modellparameter (6) als Basis zur Generierung herstellerspezifischer Geräteparameter (9) für ein weiteres, insbesondere nicht baugleiches Feldgerät (10) vorgesehen sind.

3. Vorrichtung nach einem der Ansprüche 1 oder 2,
**dadurch gekennzeichnet , dass** die Vorrichtung eine weitere Verarbeitungseinheit (8) aufweist, die zur Generierung der herstellerspezifischen Geräteparameter (9) auf Basis von Sollwerten für die Modellparameter (7) vorgesehen ist.

4. Vorrichtung nach einem der vorhergehenden Ansprüche,
**dadurch gekennzeichnet , dass** die weitere Verarbeitungseinheit (8) einen Regler aufweist, der aus einer Abweichung von für das weitere Feldgerät (10) mit Hilfe der Vorrichtung bestimmten Modellparametern (6) und den Sollwerten für die Modellparameter (7) die herstellerspezifischen Geräteparameter (9) des weiteren Feldgerätes (10) ermittelt.

5. Vorrichtung nach einem der vorhergehenden Ansprüche,
**dadurch gekennzeichnet , dass** die Vorrichtung derartig ausgebildet ist, dass die Identifikation der Modellparameter sowohl während als auch außerhalb des Betriebes des Feldgerätes (1) durchführbar ist.

6. Vorrichtung nach einem der vorhergehende Ansprüche,
**dadurch gekennzeichnet , dass** die Beobachtungseinheit (2) zur Aufzeichnung von über Außenschnittstellen des Feldgerätes (1) gesendeten und/oder empfangenen Signalen vorgesehen ist.

7. Vorrichtung nach einem der vorhergehende Ansprüche,
**dadurch gekennzeichnet , dass** die zweite Speichereinheit (4) zur Speicherung des herstellerunabhängigen Feldgerätemodells in einer standardisierten Beschreibungssprache vorgesehen ist.

8. Verfahren zur Parameteridentifikation mindestens eines Feldgerätes (1) für die Automatisierungstechnik bei dem
- das Feldgeräteverhalten beobachtet und das Feldgeräteverhalten beschreibende Betriebsinformationen aufgezeichnet werden,
- die Betriebsinformationen in einem ersten Speicherbereich (3) gespeichert werden,
- ein herstellerunabhängiges das Betriebsverhalten des Feldgerätes (1) nachbildendes Feldgerätemodell in einem zweiten Speicherbereich (4) gespeichert wird und
- mit Hilfe einer Verarbeitungseinheit (5) dem herstellerunabhängigen Feldgerätemodell zugehörige Modellparameter (6) basierend auf den Betriebsinformationen identifiziert werden derart, dass das parametrisierte herstellerunabhängige Feldgerätemodell dasselbe Systemverhalten aufweist wie das reale Feldgerät (1).

9. Verfahren nach Anspruch 8,
**dadurch gekennzeichnet , dass** die mit der Verarbeitungseinheit (5) für das Feldgerät (1) identifizierten Modellparameter (6) als Basis zur Generierung herstellerspezifischer Geräteparameter (9) für ein weiteres, insbesondere nicht baugleiches Feldgerät (10) verwendet werden.

10. Verfahren nach einem der Ansprüche 8 oder 9,
**dadurch gekennzeichnet , dass** mit Hilfe einer weiteren Verarbeitungseinheit (8) die herstellerspezifischen Geräteparameter (9) auf Basis von Sollwerten für die Modellparameter (7) generiert werden.

11. Verfahren nach einem der Ansprüche 8 bis 10,
**dadurch gekennzeichnet , dass** aus einer Abweichung von für das weitere Feldgerät (10) mit Hilfe der Vorrichtung bestimmten Modellparametern (6) und den Sollwerten für die Modellparameter (7) die herstellerspezifischen Geräteparameter (9) des weiteren Feldgerätes (10) ermittelt werden.

12. Verfahren nach einem der Ansprüche 8 bis 11,
**dadurch gekennzeichnet , dass** die Vorrichtung derartig ausgebildet ist, dass die Identifikation der Modellparameter entweder während oder außerhalb des Betriebes des Feldgerätes (1) durchgeführt wird.

13. Verfahren nach einem der Ansprüche 8 bis 12,
**dadurch gekennzeichnet , dass** über Au-ßenschnittstellen des Feldgerätes (1) gesendete und/oder empfangene Signale aufgezeichnet werden.

14. Verfahren nach einem der Ansprüche 8 bis 13,
**dadurch gekennzeichnet , dass** das herstellerunabhängige Feldgerätemodell in einer standardisierten Beschreibungssprache gespeichert wird.

## Claims

1. Apparatus for identifying parameters of at least one field device (1) used in automation technology, having
- a monitoring unit (2) for monitoring the field device behaviour and recording operating information describing the field device behaviour,
- a first memory area (3) for storing the operating information,
- a second memory area (4) for storing a vendor-neutral field device model simulating the operational behaviour of the field device (1), and
- a processing unit (5) for identifying model parameters (6) associated with the vendor-neutral field device model based on the operating information in such a way that the parameterised, vendor-neutral field device model will exhibit the same system behaviour as the real field device (1).

2. Apparatus according to claim 1,
**characterised in that** the model parameters (6) identified for the field device (1) by the processing unit (5) are provided as a basis for generating vendor-specific device parameters (9) for a further field device (10), in particular one that is not identical in design.

3. Apparatus according to one of claims 1 or 2,
**characterised in that** the apparatus has a further processing unit (8) that is provided for generating the vendor-specific device parameters (9) on the basis of target values for the model parameters (7).

4. Apparatus according to one of the preceding claims,
**characterised in that** the further processing unit (8) has a controller that determines the vendor-specific device parameters (9) of the further field device (10) from a deviation from model parameters (6) determined for the further field device (10) with the aid of the apparatus and from the target values for the model parameters (7).

5. Apparatus according to one of the preceding claims,
**characterised in that** the apparatus is embodied such that identifying of the model parameters can be performed both while the field device (1) is operating and while it is not.

6. Apparatus according to one of the preceding claims,
**characterised in that** the monitoring unit (2) is provided for recording signals sent and/or received via external interfaces of the field device (1).

7. Apparatus according to one of the preceding claims,
**characterised in that** the second memory unit (4) is provided for storing the vendor-neutral field device model in a standardised description language.

8. Method for identifying parameters of at least one field device (1) used in automation technology, wherein
- the field device behaviour is monitored and operating information describing the field device behaviour is recorded,
- the operating information is stored in a first memory area (3),
- a vendor-neutral field device model simulating the operational behaviour of the field device (1) is stored in a second memory area (4), and
- with the aid of a processing unit (5), model parameters (6) associated with the vendor-neutral field device model are identified based on the operating information in such a way that the parameterised, vendor-neutral field device model will exhibit the same system behaviour as the real field device (1).

9. Method according to claim 8,
**characterised in that** the model parameters (6) identified for the field device (1) by means of the processing unit (5) are used as a basis for generating vendor-specific device parameters (9) for a further field device (10), in particular one that is not identical in design.

10. Method according to one of claims 8 or 9,
**characterised in that** the vendor-specific device parameters (9) are generated with the aid of a further processing unit (8) on the basis of target values for the model parameters (7).

11. Method according to one of claims 8 to 10,
**characterised in that** the vendor-specific device parameters (9) of the further field device (10) are determined from a deviation from model parameters (6) determined for the further field device (10) with the aid of the apparatus and from the target values for the model parameters (7).

12. Method according to one of claims 8 to 11,
**characterised in that** the apparatus is embodied such that identifying of the model parameters is performed both while the field device (1) is operating and while it is not.

13. Method according to one of claims 8 to 12,
**characterised in that** signals sent and/or received via external interfaces of the field device (1) are recorded.

14. Method according to one of claims 8 to 13,
**characterised in that** the vendor-neutral field device model is stored in a standardised description language.

## Revendications

1. Dispositif permettant d'identifier des paramètres d'au moins un appareil de terrain (1) dans le domaine de la technique d'automatisation, le dispositif comportant
- une unité d'observation (2) permettant d'observer le comportement de l'appareil de terrain et d'enregistrer des informations de fonctionnement décrivant le comportement de l'appareil de terrain,
- une première zone de mémorisation (3) permettant de mémoriser les informations de fonctionnement,
- une deuxième zone de mémorisation (4) permettant de mémoriser un modèle d'appareil de terrain qui est indépendant du fabricant et qui reproduit le comportement en fonctionnement de l'appareil de terrain (1) et
- une unité de traitement (5) permettant d'identifier des paramètres de modèle (6), associés au modèle d'appareil de terrain qui est indépendant du fabricant, en se fondant sur les informations de fonctionnement de sorte que le modèle d'appareil de terrain paramétré, indépendant du fabricant, a le même comportement systémique que l'appareil de terrain réel (1).

2. Dispositif selon la revendication 1, **caractérisé en ce que** les paramètres de modèle (6), identifié par l'unité de traitement (5) pour l'appareil de terrain (1), sont prévues comme base pour générer des paramètres d'appareil (9), spécifiques à un fabricant, qui sont destinés à un autre appareil (10), notamment de construction différente.

3. Dispositif selon l'une des revendications 1 ou 2,
**caractérisé en ce que** le dispositif comporte une autre unité de traitement (8) qui est prévue pour générer les paramètres d'appareil (9), spécifiques à un fabricant, en se fondant sur des valeurs de consigne pour les paramètres de modèle (7).

4. Dispositif selon l'une des revendications précédentes, **caractérisé en ce que** l'autre unité de traitement (8) comporte un régulateur qui détermine à partir d'un écart entre des paramètres de modèle (6), déterminés pour l'autre appareil de terrain (10) à l'aide du dispositif, et les valeurs de consigne pour les paramètres de modèle (7) les paramètres d'appareil (9), spécifiques à un fabricant, de l'autre appareil de terrain (10).

5. Dispositif selon l'une des revendications précédentes, **caractérisé en ce que** le dispositif est conformé de telle sorte que l'identification des paramètres de modèle peut être effectuée aussi bien pendant qu'en dehors du fonctionnement de l'appareil de terrain (1).

6. Dispositif selon l'une des revendications précédentes, **caractérisé en ce que** l'unité d'observation (2) est prévu pour enregistrer des signaux envoyés et/ou reçus par le biais d'interfaces extérieures de l'appareil de terrain (1).

7. Dispositif selon l'une des revendications précédentes, **caractérisé en ce que** la deuxième unité de mémorisation (4) est prévue pour mémoriser le modèle d'appareil de terrain, indépendant d'un fabricant, dans un langage de description normalisée.

8. Procédé d'identification de paramètres permettant d'identifier des paramètres d'au moins un appareil de terrain (1) dans le domaine de la technique d'automatisation, procédé dans lequel
- on observe le comportement de l'appareil de terrain et on enregistre des informations de fonctionnement décrivant le comportement de l'appareil de terrain,
- on mémorise les informations de fonctionnement dans une première zone de mémorisation (3),
- on mémorise un modèle d'appareil de terrain, indépendant d'un fabricant et reproduisant le comportement en fonctionnement de l'appareil de terrain (1), et
- on identifie, à l'aide d'une unité de traitement (5), des paramètres de modèle (6), associés au modèle d'appareil de terrain indépendant d'un fabricant, en se fondant sur les informations de fonctionnement de sorte que le modèle d'appareil de terrain paramétré, indépendant d'un fabricant, a le même comportement systémique que l'appareil de terrain réel (1).

9. Procédé selon la revendication 8, **caractérisé en ce que** les paramètres de modèle (6), identifiés avec l'unité de traitement (5) pour l'appareil de terrain (1), sont utilisés comme base pour générer des paramètres d'appareil (9), spécifiques à un fabricant, pour un autre appareil de terrain (10), notamment de construction différente.

10. Procédé selon l'une des revendications 8 ou 9, **caractérisé en ce que** les paramètres d'appareil (9), spécifiques à un fabricant, sont générés à l'aide d'une autre unité de traitement (8) en se fondant sur des valeurs de consigne pour les paramètres de modèle (7).

11. Procédé selon l'une des revendications 8 à 10, **caractérisé en ce que** les paramètres d'appareil (9), spécifiques à un fabricant, de l'autre appareil de terrain (10) sont déterminés à partir d'un écart entre les paramètres de modèle (6), déterminés pour l'autre appareil de terrain (10) à l'aide du dispositif, et les valeurs de consigne pour les paramètres de modèle (7).

12. Procédé selon l'une des revendications 8 à 11, **caractérisé en ce que** le dispositif est conformé de telle sorte que l'identification des paramètres de modèle est effectuée pendant ou en dehors du fonctionnement de l'appareil de terrain (1).

13. Procédé selon l'une des revendications 8 à 12, **caractérisé en ce que** l'on enregistre des signaux envoyés et/ou reçus par le biais d'interfaces extérieures de l'appareil de terrain.

14. Procédé selon l'une des revendications 8 à 13, **caractérisé en ce que** le modèle d'appareil de terrain, indépendant d'un fabricant, est mémorisé dans un langage de description normalisé.
